# EUROPEAN PATENT APPLICATION

(11) **EP 0 695 074 A2**
(43) Date of publication of application: **31.01.1996**
(21) Application number: 95111713.4
(22) Date of filing: 25.07.1995
(51) Int. Cl.: H04M 3/42, H04M 3/54, H04M 11/02

(54) **Apparatus for plural automatic pagings and method therefor**

(30) Priority: 29.07.1994 KR 1853894
(71) Applicant: Hwang, Hong Seop, Ilwon-dong, Kangnam-ku, Seoul (KR)
(72) Inventor: Hwang, Hong Seop, Ilwon-dong, Kangnam-ku, Seoul (KR)
(74) Representative: Schmitz, Hans-Werner, Dipl.-Ing.

(57) **Abstract**

In an apparatus for plural automatic pagings by which an individual user is selectively paged among plural absent users to transmit messages to the individual user and the message that the user cannot receive in a reception disabled area is retransmitted by an audio answering or paging service, thereby allowing the individual user to receive the messages, and the method therefor, pager subscribers' numbers of plural users are input in advance. When a caller pages an individual user among the plural absent users, the caller's message and individual number are received in response to the page. Thereafter, the subscriber's number of the pager receiver of the user corresponding to the individual number is paged among the plural users, and the received message and detection number is transmitted thereto, so that the caller can page the individual user among the plural users and the message can be notified to the individual user immediately. Also, the message which is not received by the pager receiver in the underground or reception disabled area, i.e., the information without detection number, is pre-received in response to the retransmission request instruction by the user's page, and the stored message and detection number is transmitted by an audio response or is retransmitted by a pager, thereby precisely notifying the individual user of the message of the caller who pages the individual user among plural absent users.

## Description

### Background of the Invention

The present invention relates to an apparatus for plural automatic pagings by which an individual user is selectively paged among plural absent users to transmit messages to the individual user and the message that the user cannot receive in a reception disabled area is retransmitted by an audio answering or paging service, thereby allowing the individual user to receive the messages, and the method therefor.

A conventional automatic answering apparatus is an automatic answering telephone, by which an audio message indicating a user's absence is transmitted in response to a calling signal from a caller who calls an absent user and a transmittal message from the caller is stored in a recording medium. That is to say, a general automatic answering telephone reproduces the transmittal message stored in the incorporated recording medium in itself by the manipulation of the user who are back home, or by the user's request for reproduction of the transmittal message via a public telephone network.

However, the general automatic answering telephone cannot automatically notify the user of the caller's transmittal message received during his absence. Thus, the user should manipulate the automatic answering telephone for pages repeatedly. Also, the to- be-transmitted message cannot be provided to the user opportunely.

Also, if plural users commonly use the automatic answering telephone, the general automatic answering telephone cannot selectively transmit the individual message. That is to say, if multiple users share an automatic answering telephone, it is difficult for a caller to select a desired user among the plural users during their absence to transmit his message.

Also, when a high-frequency signal containing his intrinsic address is transmitted from a paging base station via a transmission path, the general pager receiver generates a calling warning, notifies that a subscriber calls a user, and then displays the received caller's message, e.g., telephone number or characters. However, the general pager receiver has a drawback in that the message cannot be transmitted when the user is under ground or in other area where the message reception is not available.

The whereabouts of a person using the general pager receiver is likely to be unclear. Also, it is not possible to select an individual user among plural absent users using a user's paging subscription number to transmit the message such as the telephone number to contact or characters. Moreover, it is difficult to contact the caller opportunely.

### Summary of the Invention

It is an object of the present invention to provide an apparatus for plural automatic pagings by which an individual pager receiver is automatically paged in order to notify a paged individual user of a message when the message is generated from a caller who calls the individual user among plural absent users, and allows the individual user to finally receive the message such that the message assigned with the detection numbers in the form of numbers or characters is transmitted to detect and retransmit the message which is not received in the reception disabled area, and method therefor.

To accomplish the above objects, there is provided an apparatus for plural automatic pagings comprising: switching means connected to public telephone lines for performing a switching function; matching means connected to the switching means for performing a matching function; ring signal detecting means for detecting ring signals input from the public telephone lines through the switching means; dual tone multi frequency (DTMF) signal receiving means for receiving and decoding a DTMF signal input through the matching means; audio frequency signal detecting means for detecting an audio frequency signal input through the matching means; DTMF signal generating means for generating a DTMF signal according to a pager subscriber's number, a received message, a detection number and a stored message by a retransmission instruction in order to page an individual user among plural absent users, and transmitting the generated signal to the public telephone lines through the matching means; audio synthesizing means for for detecting the pre-stored message in response to a caller's message, individual number input requesting message and a request for retransmission of the stored message which is not received by the user, generating an audio response message and transmitting the same to the public telephone lines through the matching means; key inputting means for the user inputting pager subscribers' numbers of the plural users and a key signal for checking the contents of the received message from the caller; memory means for storing plural pager subscribers' numbers, caller's message and detection serial numbers and controlling means for controlling the memory means, switching means, DTMF signal generating means and audio synthesizing means according to the key signal input through the key inputting means and signals output from the ring signal detecting means, DTMF signal receiving means and audio frequency signal detecting means, automatically operating an individual pager receiver to transmit a message generated from a caller for paging the individual user for the purpose of notifying the individual user among plural users of the message, detecting and retransmitting the message which is not received in the reception disabled area, and allowing the individual user to receive the message.

To accomplish the above objects, there is provided a paging method for plurality of automatic pagings comprising: pager subscriber's number inputting steps of inputting and storing pager subscribers's numbers of plural users and proceeding to a ring signal input wait state; message transmitting steps of forming a calling loop and transmitting the message requesting the inputs of the caller's message and user's individual number when a ring signal is input in a ring signal inputting wait state; message receiving and processing steps of processing caller's message and user's individual number received through public telephone lines 21 and 22 according to a retransmission requesting message, after performing message transmitting steps 109, 112 and 113; and pager subscriber's number transmitting steps of closing and reforming the calling loop, paging the user's pager receiver and transmitting the stored message, after performing message receiving and processing steps.

### Brief Description of the Drawings

The above objects and advantages of the present invention will become more apparent by describing in detail a preferred embodiment thereof with reference to the attached drawings in which:
FIG. 1 is a schematic diagram of an apparatus for plural pagings according to the present invention; and
FIG. 2 is a flowchart showing a control method for plural automatic paging apparatus according to the present invention.

### Detailed Description of the Invention

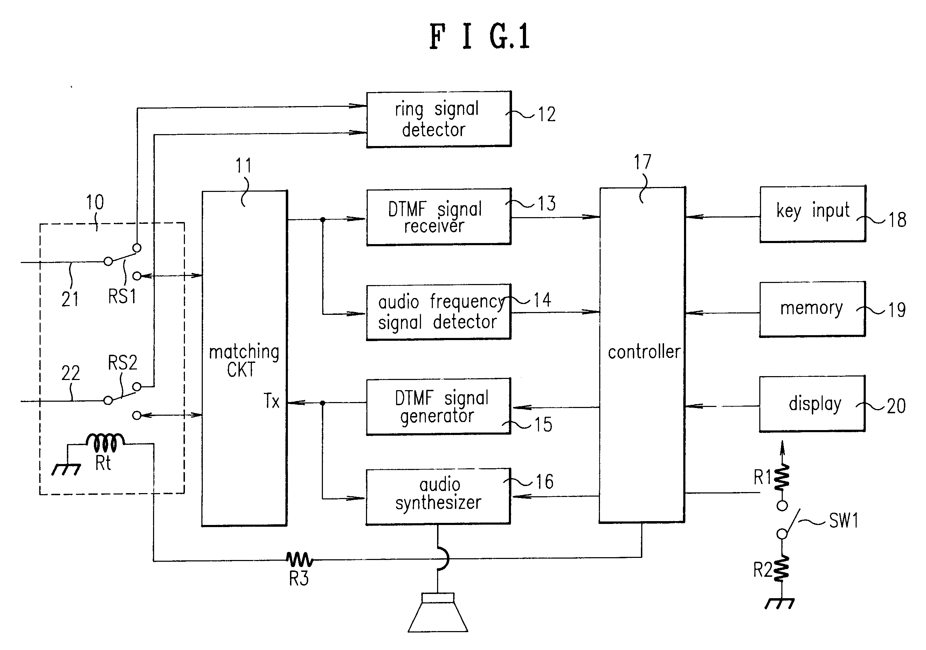

As shown in FIG. 1, a plural automatic paging apparatus according to the present invention is constituted by a switch 10, a matching circuit, a ring signal detector 12, an DTMF signal receiver 13, an audio frequency signal detector 14, a DTMF signal generator 15, an audio synthesizer 16, a controller 17, a key input 18, a memory 19 and a display 20.

Switch 10 having relays RS1 and RS2 each connected to public telephone lines 21 and 22 performs a switching function between ring signal detector 12 and matching circuit.

Matching circuit having a hybrid circuit and a transceiver circuit is connected to switch 10 and performs a matching function.

Ring signal detector 12 detects ring signals input from public telephone lines through switch 10.

Dual tone multi frequency (DTMF) signal receiver 13 receives and decodes a DTMF signal input through matching circuit.

Audio frequency signal detector 14 detects an audio frequency signal input through matching circuit. Here, the audio frequency signal includes a dial tone, a busy tone, a ring- back tone and a prompt signal.

DTMF signal generator 15 generates a DTMF signal according to a pager subscriber's number, a received message, a detection number and a stored message by a retransmission instruction in order to page an individual user among plural absent users, and transmits the generated signal to public telephone lines through matching circuit.

Audio synthesizer 16 detects the pre-stored message in response to a caller's message, individual number input requesting message and a request for retransmission of the stored message which is not received by the user, generates an audio response message and transmits the same to the public telephone lines through matching circuit.

Key input 18 having a key board is operated by the user such that a subscriber's number for a plurality of pagers is input and a key signal is input for checking the contents of the received message from the caller.

Memory 19 having a non-volatile memory stores plural pager subscribers' numbers, caller's message and detection serial numbers.

Controller 17 having a central processing unit (CPU) controls memory 19, switch 10, DTMF signal generator 16 and audio synthesizer 16 according to a key signal input through key input 18 and signals output from ring signal detector 12, DTMF signal receiver 14 and audio frequency signal detector 14. Controller 17 automatically operates an individual pager receiver to transmit a message generated from a caller for paging the individual user for the purpose of notifying an individual user among plural users of the message, and detects and retransmits the message which is not received in the reception disabled area, thereby allowing the individual user to receive the message.

Display 20 displays the contents of the received and stored message from the caller in accordance with the control of controller 17.

Here, there is further provided an input mode switch SW1 for setting input nodes of information message and plural user subscribers's numbers. Input mode switch SW1 is turned on when the user inputs a pager subscriber's number, and generates a pager input mode setting signal.

The operation of the plural automatic paging apparatus having the above configuration will now be described.

If ring signal detector 12 or matching circuit is selectively connected to public telephone lines 21 and 22 by means of switch 10 and a ring signal is input, ring signal detector 12 generates a signal of a logic high state to then be supplied to controller 17.

Also, controller 17 controls switch 10 such that matching circuit receives audio frequency signal and DTMF signal from public telephone lines 21 and 22 and supplies the same to DTMF signal receiver 13 and audio frequency signal detector 14 via its own reception port Rx, and transmits the DTMF signal output from DTMF signal generator 15 and the audio message output from audio synthesizer 16 to public telephone lines 21 and 22 through switch 10 via its own transmission port Tx.

The information supplied from DTMF signal receiver 13 includes a message to be transmitted to the user, individual number, and control instruction such as a stored message retransmission instruction.

Audio frequency signal detector 14 generates a signal when the audio frequency signal is input from the reception port Rx of matching circuit to then be supplied to controller 17.

Also, using various keys of key input 18, plural user pager subscribers' numbers are input, the pre-stored message is responded by audio via a speaker and is displayed or checked, or a control signal for recording the message or a message requesting for inputting an individual number is supplied to controller 17.

Display 20 displays errors under the control of controller 17 when the pager subscriber's number which is input by the user using key input 18 is wrong or the pager subscriber's number of the user is not stored in memory 18 at the time of the power 'on'.

While a pager input mode setting signal is input, controller 17 receives plural subscribers' numbers from key input 18 and stores the same in memory 19 by individual numbers.

Also, if the pager input mode setting signal is released, controller 17 controls switch 17 whenever a ring signal is input from ring signal detector 12 to form a calling loop. Also, controller 17 controls audio synthesizer 16 to transmit the message or the individual number input requesting message to public telephone lines 21 and 22 via switch 10. Then, the caller's message input through matching circuit and DTMF signal receiver 13, individual number and retransmission instruction are received, a detection number is given to the message to then be stored in individual user's memory 19. If the retransmission instruction is received, the message concerning the detection number and individual number is detected from memory 19 to then be stored in an operating memory (not shown) within CPU. If audio response transmission is requested, audio synthesizer 16 is controlled to respond to the detected message and detection number by audio to then close the calling loop. If the pager transmission instruction is received, the pager subscriber's number concerning the individual number is detected to then be stored in the operating memory.

Also, controller 17 drives switch 10 to clone or reform the calling loop. If a dial tone input is confirmed by the audio frequency detection signal output from audio frequency signal detector 14, controller 17 controls DTMF signal generator 15 to transmit the DTMF signal corresponding to the subscriber's number of the user to then be supplied thereto.

Also, when the input of a prompt signal is confirmed by the audio frequency detection signal from audio frequency signal detector 14, controller 17 supplies the caller's message received by DTMF signal generator 15 or detected message so that DTMF signal generator 15 generates the DTMF signal concerning the received message or detected message and detection number to transmit the same to public telephone lines 21 and 22 via matching circuit.

In controller 17, the stored message directly prereceived by the manipulation of keys of key input 18 is responded by audio through a speaker and is displayed to confirm it by sight.

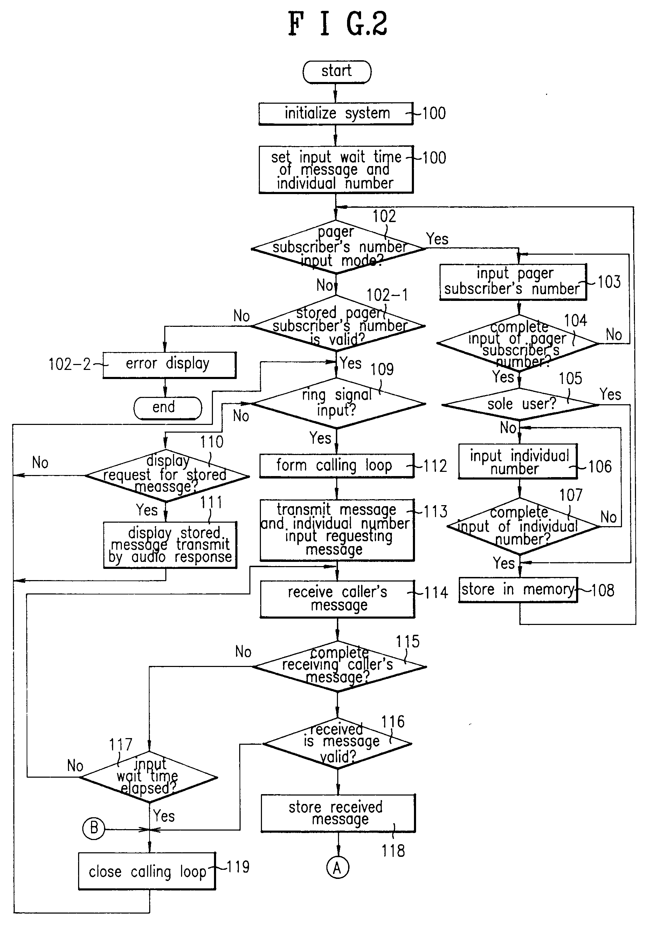

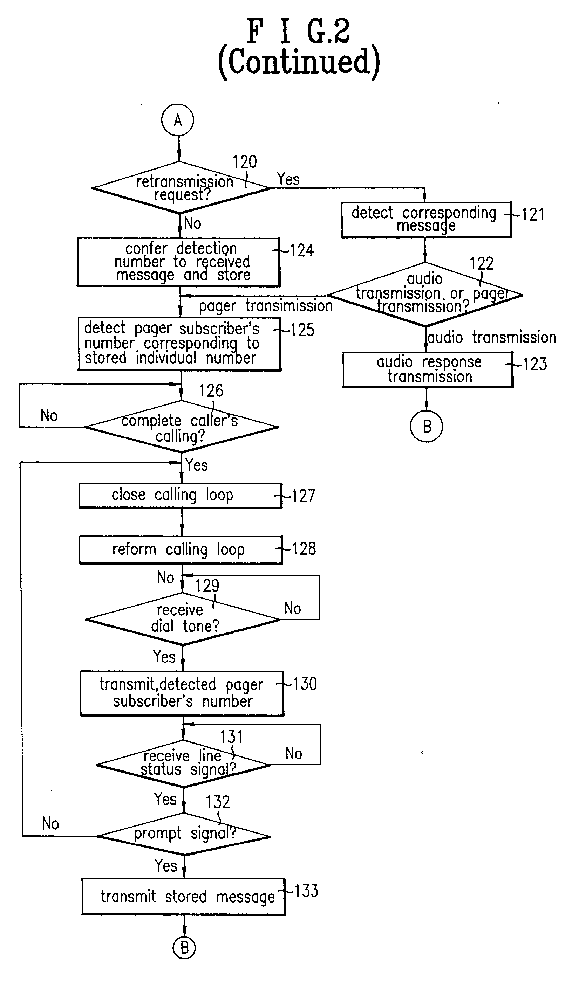

The paging method accomplished by plural automatic pagings operating as above will now be described with reference to FIG. 2.

The paging method for the plural automatic pagings is performed by the steps of inputting subscribers' numbers (steps 100 to 108), transmitting a message (steps 109, 112 and 113); receiving and processing the message (steps 114 to 126), calling pager subscribers' numbers (steps 127 to 133) and displaying the stored message (steps 110 and 111).

The subscribers' number inputting steps are to input and store pager subscribers's numbers of plural users and to proceed to a ring signal input wait state, and are performed by the steps of a system initializing step 100 of initializing the system, a input wait time setting step 101 of setting a wait time for inputting a caller's message and individual number, a pager subscriber's number input mode determining step 102 of determining whether or not the input mode selected by switch 10 is a pager subscriber's number input mode, and pager subscriber's number storing steps 103, 104, 105, 106, 107 and 108 of inputting and storing the pager subscriber's number of the user and the corresponding individual number if the mode is the pager subscriber's number input mode, and proceeding to ring signal input wait state (step 109). Here, the input wait time is set as several to several tens of seconds.

In system initializing step 100, when the power is turned on, a timer counter, a detection number counter, various buffering resisters and an operating memory installed within CPU are initialized, and an operating resister is initialized excluding the pager subscriber's number of the user which is stored in memory 19.

Also, pager subscriber's number storing steps 103, 104, 105, 106, 107 and 108 are performed by the steps of inputting the pager subscriber's number of the user if the result of the pager subscriber's number input mode determining step turns out to be the pager subscriber's number input mode (steps 103 and 104), detecting whether the user is sole or not (step 105), inputting the individual number corresponding to the pager subscriber's number if the user is not sole (steps 106 and 107), storing the input pager subscriber's number and the corresponding individual number and proceeding the process to a pager subscriber's number input mode determining step 102 (step 108), and proceeding the process directly to a input pager subscriber's number storing step 108 if the user is sole.

That is to say, if the mode is a pager subscriber's number input mode, it is detected whether input key data indicate the input completion of the pager subscriber's number of the user, and input pager subscriber's number of the user is received as an input until the key data indicating the same is input (steps 103 and 104).

Also, if the input key data indicating the input completion of the pager subscriber's number of the user are input, it is checked whether the user is sole or not, and if the user is sole, the input pager subscriber's number of the user is stored in memory (steps 105 and 108). On the other hand, if the user is not sole, it is waited that the corresponding individual number is input, and if the input of the individual number is completed, the pager subscriber's number of the user and corresponding individual number are stored in memory, and the process proceeds to the pager subscriber number input mode detecting step 109 to store plural subscribers' numbers and corresponding individual numbers (steps 106, 107 and 108).

In other words, if the user is not sole but plural, that is, if an automatic answering apparatus is shared by several people each having a pager subscriber's number, the respective pager subscribers' numbers and the corresponding individual numbers are stored in memory.

On the other hand, if the mode is not a pager subscriber's number input mode, it is detected whether the pager subscriber's number stored in memory is valid or not (step 102-1), if not, an error message is displayed on a display or an error signal is output and the process is terminated (step 101-2), and if valid, the process proceeds to a message transmitting step.

Here, the cipher of the pager subscriber's number may vary as the pager subscribers increase.

The message transmitting steps 109, 112 and 113 is to form a calling loop and to transmit the message requesting the inputs of the caller's message and user's individual number when a ring signal is input in a ring signal inputting wait state.

That is to say, when the ring signal is input in the ring signal inputting wait state, it is determined that a telephone subscriber calls the user, and switch 10 is controlled to connect public telephone lines 21 and 22 to matching circuit 11, thereby forming a calling loop (step 109 and 112). Thereafter, audio synthesizer 16 is controlled to transmit to a caller the message and a message requesting individual number input (step 113). That is to say, the message being in the form of digital data stored in an incorporated memory and a message requesting individual number input are audio-synthesized in audio synthesizer 16 under the control of controller 17, and the audio-synthesized messages are transmitted to public telephone lines 21 and 22 via matching circuit 11.

A message is transmitted to the caller. For example, *'I am out at the moment. Please input the telephone number for me to contact and the number of the person who wants me to contact. For your information, number 1 corresponds to Mr. A, number 2 corresponds to Mr. B, and so on'.*

In stored message displaying steps 110 and 111, if a stored message display request instruction is input in the ring signal inputting wait state, the stored message is displayed and the process proceeds to the ring signal inputting wait state.

In other words, it is waited until the ring signal is input in the ring signal inputting wait state (step 109). It is detected whether input key data indicates a stored message display request (step 110), and, if yes, the detection number is received and the message corresponding to the detection number among the messages stored in memory is displayed (step 111).

That is to say, using the detection number sequentially given to the messages input from the caller, if the detection number is missing, the number is determined as the message which is not received in the reception disabled area to then be displayed on the display of automatic answering apparatus.

Message receiving and processing steps 114 to 126 are to process the caller's message and user's individual number received through public telephone lines 21 and 22 according to a retransmission requesting message, after performing message transmitting steps 109, 112 and 113.

At this time, the retransmission requesting message includes the detection number corresponding to the caller's message received through public telephone lines 21 and 22.

Message receiving and processing steps are performed by caller's message storing steps 114, 115 and 118 of receiving and processing the caller's message and individual number, calling loop closing steps 116, 117 and 119 of closing a calling loop if the caller's message and individual number received during caller's message storing steps 114, 115 and 118 are not valid and an input wait time is elapsed and proceeding to the ring signal inputting wait state (step 109), a retransmission requesting message detecting step 120 of detecting whether the caller's message after caller's message storing steps 114, 115 and 118 is a stored message retransmission requesting message, a detection number conferring step 124 of conferring and storing the detection number corresponding to the caller's message stored in caller's message storing steps 114, 115 and 118 if the retransmission requesting message is not input, a corresponding pager subscriber's number detecting step 125 of detecting the pager subscriber's number corresponding to the stored individual number, a caller's calling termination detecting step 126 of detecting the feasibility of the calling termination, proceeding to pager subscriber's number transmitting steps 127 to 133 if the calling is terminated, and proceeding to calling loop closing step 119 if the calling is not terminated, and audio and pager transmitting steps 121, 122 and 123 of detecting the message corresponding to the detection number included in the retransmission requesting message if the retransmission requesting message is input, and transmitting the detected message by audio or pager.

Here, calling loop closing steps 116, 117 and 119 are performed by a step 116 of detecting whether or not a received caller's message is valid if the reception of the caller's message is completed, a step 117 of storing the received message if the received caller's message is valid and proceeding to retransmission requesting message detecting step 120, detecting whether or not an input wait time is elapsed if the reception of the caller's message is not completed and proceeding to caller's message storing steps 114, 115 and 118 if the input wait time is not elapsed, and a step 119 of closing the calling loop if the input wait time is elapsed or the received caller's message is not valid and proceeding to the ring signal input wait state (step 109).

At this time, the retransmission requesting message includes caller's transmission method requests such as audio response transmission or pager subscriber number transmission.

That is to say, after transmitting the message and individual number input requesting message (step 113), if digital data is input from DTMF signal receiver 13, controller stores the input digital data in operating memory, detects whether the number of messages stored in operating memory is a predetermined number, and determines whether the caller's key inputs are completed. Until digital key numbers stored in operating memory are input to reach the predetermined number, the message input is waited (steps 114, 115 and 117). Like this manner, if the messages corresponding to the predetermined number are input and stored, that is, if the inputs of the caller's contact telephone number is completed, the process proceeds to the stored message retransmission requesting message detecting step 120 (steps 114, 115, 116 and 118). At this time, the key number of the predetermined cipher includes an individual number if the individual number exists. Here, the predetermined cipher may be set as a number of 16 ciphers so that international telephone numbers may be received.

In this manner, after receiving the caller's message (steps 114 and 115), it is detected whether the caller's message and individual number are valid or not (step 116). If the caller's message and individual number are not valid and the input wait time is elapsed, the calling loop is closed (step 119) and the process proceeds to the ring signal input wait state (step 109).

Also, the caller's message is valid, the received message is stored and the process proceeds to stored message retransmission requesting message detecting step 120 (step 118).

In this manner, after performing the caller's message storing step, stored message retransmission requesting message detecting step 120 is performed for detecting whether the caller's message is the stored message retransmission requesting message or not.

That is to say, after performing the caller's message storing step, if there is no received caller's message, it is detected whether or not the first key number of the received caller's message is the stored message retransmission request instruction to determine whether the retransmission request instruction comes from the user (step 120).

As the result of the determination, if the first key input of the received caller's data is the stored message retransmission request instruction, the process proceeds to audio and pager transmitting steps 121, 122 and 123. If the first key input of the received caller's data is not the stored message retransmission request instruction, the process proceeds to detection number conferring step 124.

That is to say, if the first key input of the received caller's data is not the stored message retransmission request instruction, the counted value of the detection number is increased by one the increased detection number is conferred to the received caller's message and is stored (step 124), the pager subscriber's number corresponding to the stored individual number is detected (step 125) and the process proceeds to calling termination detecting step 126.

After performing corresponding pager subscriber's number detecting step, it is detected by audio frequency signal detector 14 whether or not a busy tone is input from public telephone lines 21 and 22. If the busy tone is input, the process proceeds to pager subscriber's number transmitting steps 127 to 133.

Audio and pager transmission steps 121, 122 and 123 are performed by the steps of detecting the message corresponding to the detection number included in the retransmission requesting message if the retransmission requesting message is input (step 121), detecting whether the requested transmission method included in the retransmission requesting message is an audio response transmission or pager transmission (step 122), and proceeding to the corresponding pager subscriber's number detecting step 125 if the requested transmission method is the pager transmission, and transmitting the detected message by audio if the requested transmission method is the audio response transmission (step 123).

That is to say, if the retransmission requesting message is input, the data corresponding to the detection number included in the retransmission requesting message is detected and the detected message and detection number are stored (step 121). At this time, the requested transmission method included in the retransmission requesting message is detected and it is detected whether the requested transmission method is an audio response transmission or pager transmission (step 122). As the result of the detection, if the requested transmission method is the audio response transmission, the stored data is transmitted by an audio service through audio synthesizer (step 123) and proceeds to calling loop closing step 126 (step 123). For example, the stored caller's pager subscriber's number and detection number are transmitted by audio.

If the requested transmission method is the pager transmission, the process proceeds to corresponding pager subscriber's number detecting step 125 of detecting the pager subscriber's number corresponding to the individual number (step 122).

In other words, in audio and pager transmitting steps 121, 122 and 123, the detection numbers sequentially conferred to the input caller's messages are used. If the detection number is missing, it is determined that the message is not received in the reception disabled area, and the retransmission of the message is requested in order for the user to receive the message.

Next, pager transmitting steps are to close and reform the calling loop, to page the user's pager receiver and to transmit the stored message, after performing message receiving and processing steps.

Here, pager subscriber's number transmitting steps 127 to 133 are performed by the steps of calling loop reforming steps 127 and 128 of closing and reforming the calling loop, pager receiver calling steps 129, 130, 131 and 132 of calling the pager receiver according to the detected pager subscriber's number of the user, and a message transmitting step 133 of transmitting the stored message.

Pager receiver calling steps are performed by the steps of receiving a dial tone (step 129), transmitting the detected pager subscriber's number of the user (step 130), receiving a line state signal (step 131), and detecting whether or not a line state signal is a prompt signal, proceeding to calling loop reforming steps 127 and 128 if the line state signal is not a prompt signal, and proceeding to message transmitting step 133 if the line state signal is not prompt signal.

If the calling is completed, the calling loop is reformed and the it is switched to a calling status (step 128). After reforming the calling loop, it is waited until a dial tone is input from audio frequency signal detector 14 through public telephone lines 21 and 22. If the dial tone is input (step 129), the detected pager subscribers' numbers are sequentially applied to DTMF signal generator 15 to then transmit the pager subscribers' numbers (step 130).

After transmitting the pager subscribers' numbers (step 130), it is waited until the line state signal is input from a paging exchanger (step 131). If the line state signal is input, it is detected whether or not the input line state signal is a prompt signal requesting the message transmission (step 132).

As the result of the detection, if the input line state signal is not a prompt signal, that is, if the signal is a prompt signal, the message stored in memory, i.e., the caller's telephone number and detection number are sequentially supplied to DTMF signal generator 15. (step 133).

Then, DTMF signal generator 15 generates a DTMF signal corresponding to the messages and detection number which are sequentially applied thereto and transmits the generated DTMF signal to public telephone lines 21 and 22 via match 1.

The DTMF signal concerning the messages and detection number transmitted to public telephone lines 21 and 22 is transmitted from the paging base station to the pager receiver owned by the user via a transmission path to then be displayed visually so that the user can identify.

Also, after transmitting the stored messages (step 133), controller 17 controls switch 10 to be connected to ring signal detector 12, close the calling loop and switch the calling state into a ring wait state. Thereafter, the process proceeds to ring signal input wait state (step 109).

As described above, according to the present invention, pager subscribers' numbers of plural users are input in advance. When a caller pages an individual user among the plural absent users, the caller's message and individual number are received in response to the page. Thereafter, the subscriber's number of the pager receiver of the user corresponding to the individual number is paged among the plural users, and the received message and detection number is transmitted thereto, so that the caller can page the individual user among the plural users and the message can be notified to the individual user immediately. Also, the message which is not received by the pager receiver in the underground or reception disabled area, i.e., the information without detection number, is pre-received in response to the retransmission request instruction by the user's page, and the stored message and detection number is transmitted by an audio response or is retransmitted by a pager, thereby precisely notifying the individual user of the message of the caller who pages the individual user among plural absent users.

## Claims

1. An apparatus for plural automatic pagings comprising:
switching means connected to public telephone lines for performing a switching function;
matching means connected to said switching means for performing a matching function;
ring signal detecting means for detecting ring signals input from said public telephone lines through said switching means;
dual tone multi frequency (DTMF) signal receiving means for receiving and decoding a DTMF signal input through said matching means;
audio frequency signal detecting means for detecting an audio frequency signal input through said matching means;
DTMF signal generating means for generating a DTMF signal according to a pager subscriber's number, a received message, a detection number and a stored message by a retransmission instruction in order to page an individual user among plural absent users, and transmitting the generated signal to said public telephone lines through said matching means;
audio synthesizing means for for detecting the pre-stored message in response to a caller's message, individual number input requesting message and a request for retransmission of the stored message which is not received by the user, generating an audio response message and transmitting the same to said public telephone lines through said matching means;
key inputting means for the user inputting pager subscribers' numbers of the plural users and a key signal for checking the contents of the received message from said caller;
memory means for storing plural pager subscribers' numbers, caller's message and detection serial numbers; and
controlling means for controlling said memory means, switching means, DTMF signal generating means and audio synthesizing means according to said key signal input through said key inputting means and signals output from said ring signal detecting means, DTMF signal receiving means and audio frequency signal detecting means, automatically operating an individual pager receiver to transmit a message generated from said caller for paging said individual user for the purpose of notifying said individual user among plural users of said message, detecting and retransmitting said message which is not received in the reception disabled area, and allowing said individual user to receive said message.

2. An apparatus for plural automatic pagings as claimed in claim 1, further comprising displaying means for displaying the contents of the caller's pre-received and stored message in accordance with the control of said controlling means.

3. An apparatus for plural automatic pagings as claimed in claim 1, wherein said audio frequency signal includes a dial tone, a busy tone, a ring- back tone and a prompt signal.

4. A paging method for plural automatic pagings comprising:
pager subscriber's number inputting steps of inputting and storing pager subscribers's numbers of plural users and proceeding to a ring signal input wait state;
message transmitting steps of forming a calling loop and transmitting the message requesting the inputs of a caller's message and user's individual number when a ring signal is input in a ring signal inputting wait state;
message receiving and processing steps of processing said caller's message and user's individual number received through said public telephone lines according to a retransmission requesting message, after performing said message transmitting steps; and
pager subscriber's number transmitting steps of closing and reforming said calling loop, paging said user's pager receiver and transmitting the stored message, after performing said message receiving and processing steps.

5. A paging method for plural automatic pagings as claimed in claim 4, further comprising a stored message displaying step of displaying said stored message if a stored message display request instruction is input in said ring signal input wait state, and proceeding to said ring signal input wait state.

6. A paging method for plural automatic pagings as claimed in claim 4, wherein said pager subscriber's number inputting step includes: a system initializing step of initializing the system; a input wait time setting step of setting a wait time for inputting a caller's message and individual number; a pager subscriber's number input mode determining step of determining whether or not the input mode selected by said switching means is a pager subscriber's number input mode; and pager subscriber's number storing steps of inputting and storing said pager subscriber's number of said user and the corresponding individual number if the mode is a pager subscriber's number input mode, and proceeding to said ring signal input wait state.

7. A paging method for plural automatic pagings as claimed in claim 6, wherein said pager subscriber's number inputting step further includes stored pager subscriber's number valid-processing steps of detecting whether or not the pager subscriber's number stored in memory is valid, and outputting an error signal if not, and proceeding to said message transmitting step if valid.

8. A paging method for plural automatic pagings as claimed in claim 6, wherein said input wait time is set as several to several tens of seconds.

9. A paging method for plural automatic pagings as claimed in claim 6, wherein said pager subscriber's number storing steps are performed by the steps of inputting said pager subscriber's number of said user if the result of said pager subscriber's number input mode determining step turns out to be said pager subscriber's number input mode, detecting whether or not the user is sole, inputting the individual number corresponding to said pager subscriber's number if said user is not sole, storing said input pager subscriber's number and the corresponding individual number and proceeding the process to a pager subscriber's number input mode determining step, and proceeding the process directly to a input pager subscriber's number storing step if said user is sole.

10. A paging method for plural automatic pagings as claimed in claim 4, wherein said retransmission requesting message includes the detection number corresponding to the caller's message received through said public telephone lines.

11. A paging method for plural automatic pagings as claimed in claim 10, wherein said message receiving and processing step includes the steps of: caller's message storing steps of receiving and processing said caller's message and individual number; calling loop closing steps of closing a calling loop if said caller's message and individual number received during said caller's message storing steps are not valid and an input wait time is elapsed, and proceeding to said ring signal inputting wait state; a retransmission requesting message detecting step of detecting whether said caller's message after said caller's message storing steps is a stored message retransmission requesting message; a detection number conferring step of conferring and storing said detection number corresponding to said caller's message stored in said caller's message storing steps if said retransmission requesting message is not input; a corresponding pager subscriber's number detecting step of detecting said pager subscriber's number corresponding to said stored individual number; a caller's calling termination detecting step of detecting the feasibility of said calling termination, proceeding to said pager subscriber's number transmitting steps if said calling is terminated, and proceeding to said calling loop closing step if said calling is not terminated; and audio and pager transmitting steps of detecting said message corresponding to said detection number included in said retransmission requesting message if said retransmission requesting message is input, and transmitting the detected message by audio or pager.

12. A paging method for plural automatic pagings as claimed in claim 11, wherein said calling loop closing steps are performed by the steps of: detecting whether or not a received caller's message is valid if the reception of the caller's message is completed; storing said received message if said received caller's message is valid and proceeding to said retransmission requesting message detecting step; detecting whether or not an input wait time is elapsed if the reception of the caller's message is not completed and proceeding to said caller's message storing steps if said input wait time is not elapsed; and closing said calling loop if said input wait time is elapsed or said received caller's message is not valid and proceeding to said ring signal input wait state.

13. A paging method for plural automatic pagings as claimed in claim 11, wherein said retransmission requesting message includes caller's transmission method requests such as audio response transmission or pager subscriber number transmission.

14. A paging method for plural automatic pagings as claimed in claim 13, wherein said audio and pager transmitting steps are performed by the steps of detecting the message corresponding to the detection number included in said retransmission requesting message if said retransmission requesting message is input, detecting whether the requested transmission method included in said retransmission requesting message is an audio response transmission or pager transmission, and proceeding to said corresponding pager subscriber's number detecting step if said requested transmission method is said pager transmission, and transmitting said detected message by audio if said requested transmission method is said audio response transmission.

15. A paging method for plural automatic pagings as claimed in claim 4, wherein said pager subscriber's number transmitting steps are performed by the steps of: calling loop reforming steps of closing and reforming said calling loop; pager receiver calling steps of calling said pager receiver according to the detected pager subscriber's number of said user; and a message transmitting step of transmitting said stored message.

16. A paging method for plural automatic pagings as claimed in claim 15, wherein said pager receiver calling steps are performed by the steps of: receiving a dial tone; transmitting said detected pager subscriber's number of said user; receiving a line state signal; and detecting whether or not said line state signal is a prompt signal, proceeding to said calling loop reforming steps if said line state signal is not a prompt signal, and proceeding to said message transmitting step if said line state signal is not prompt signal.
